# EUROPEAN PATENT APPLICATION

(11) **EP 1 840 892 A2**
(43) Date of publication of application: **03.10.2007**
(21) Application number: 07104456.4
(22) Date of filing: 20.03.2007
(51) Int. Cl.: G11B 7/24, G11B 7/26

(54) **Optical disk, optical disk manufacturing method and optical disk reproducing method**

(30) Priority: 28.03.2006 JP 2006088714
(71) Applicant: Kabushiki Kaisha Toshiba, Tokyo 105-8001 (JP)
(72) Inventor: Ootera, Yasuaki, Tokyo 105-8002 (JP); Yamamoto, Ryosuke, Tokyo 105-8001 (JP); Yoshida, Nobuhisa, Tokyo 105-8001 (JP); Nakamura, Naomasa, Tokyo 105-8001 (JP)
(74) Representative: Henkel, Feiler & Hänzel

(57) **Abstract**

According to one embodiment, there is provided an optical disk including a photopolymer layer (24) including a recording pattern (3) formed by concave pits, and a reflecting film (25) formed on the photopolymer layer (24). The depth direction of the concave pits is opposite to the direction in which the reflecting film (25) is formed.

## Description

One embodiment of the invention relates to a multilayer optical disk which can store information, such as a CD, a DVD, a BD (Blu-ray Disc), an HD DVD, etc. Additionally, another embodiment of the invention relates to a manufacturing method of the multilayer optical disk. Further, still another embodiment of the invention relates to a reproducing method of the multilayer optical disk.

Currently, optical disks such as CDs and DVDs are generally used as media for storing digitized information. Among these optical disks, a DVD (or an HD DVD whose standardization is in progress as the next-generation optical disk) includes a disk structure where two plastic substrates are attached to each other. Hence, it is relatively easy to increase the storage capacity of the DVD by using two information recording layers. However, in the case where three or more layers are used, a disk manufacturing method is used which includes, for example, a pattern transfer process onto a photopolymer, in addition to a pattern forming process by conventional injection molding.

As for multilayer optical disk manufacturing methods, a method has been proposed which presses a stamper having recording pits against a photosensitive transfer sheet to transfer the recording pits onto the photosensitive transfer sheet, depositing aluminum on a concavo-convex surface of the photosensitive transfer sheet to form a reflecting layer, superimposing reflecting layers to each other by interposing an adhesive therebetween, each of the reflecting layers being formed on a pit-pattern side of a substrate, and curing the adhesive to manufacture a multilayer recording medium (for example, refer to Japanese Patent Application KOKAI Publication No. 2003-242682).

A method is now under review which forms an optical disk including three or more layers by forming two layers by injection molding as in conventional DVDs, and forms the other layers by using a photopolymer. In this method, pattern formation is performed by applying a photopolymer on a molded board, pressing a plastic stamper against the molded board, and curing the photopolymer. This is performed by taking advantage of a fact that the plastic stamper is easily separated from the photopolymer.

In such a case, since a material to be used is changed, the reflecting layer is not satisfactorily formed on the pattern of the photopolymer.

An object of the invention is to provide an optical disk in which concave and convex shapes of a pit pattern (recording pattern) formed by photopolymer are inverted, and the depth direction of pits is opposite to the direction in which layers are formed; a method of manufacturing the optical disk; and a method of reproducing the optical disk.

According to an embodiment of the invention, there is provided an optical disk including: a photopolymer layer including a recording pattern formed by concave pits; and a reflecting film formed on the photopolymer layer, wherein a depth direction of the concave pits is opposite to a direction in which the reflecting film is formed.

According to another embodiment of the invention, there is provided an optical disk including: a photopolymer layer including a recording pattern formed by convex pits; and a reflecting film formed on the photopolymer layer and made of one of aluminum and aluminum alloy, wherein a direction in which the convex pits project is the same as a direction in which the reflecting film is formed.

According to still another embodiment of the invention, there is provided an optical disk including: three recording layers, at least one of the recording layers being a photopolymer layer including a recording pattern formed by concave pits, the one of the recording layers being second closest to a surface on which a reproducing light is incident; and a reflecting film formed on the one of the recording layers, and made of one of silver, silver alloy, aluminum, and aluminum alloy, wherein a depth direction of the concave pits is opposite to a direction in which the reflecting film is formed.

According to yet another embodiment of the invention, there is provided an optical disk including: three recording layers, at least one of the recording layers being a photopolymer layer including a recording pattern formed by convex pits, the one of the recording layers being second closest to a surface on which a reproducing light is incident; and a reflecting film formed on the one of the recording layers, and made of one of aluminum and aluminum alloy, wherein a direction in which the convex pits project is the same as a direction in which the reflecting film is formed.

According to a further embodiment of the invention, there is provided a method of manufacturing an optical disk including three recording layers, including: forming a plastic stamper which includes convex portions for transferring a recording pattern formed by concave pits, the convex portions being formed such that a depth direction of the concave pits become opposite to a direction in which a reflecting film is to be formed; forming a photopolymer layer which serves as one of the recording layers which is second closest to a surface on which a reproducing light is incident; transferring the recording pattern to the photopolymer layer by using the plastic stamper; and forming the reflecting film on the photopolymer layer.

According to still further embodiment of the invention, there is provided a method of reproducing an optical disk including: emitting laser light onto any one of the above-mentioned optical disks; receiving the laser light reflected by the optical disk; and reproducing information recorded on the optical disk based on the received laser light.

The invention can be more fully understood from the following detailed description when taken in conjunction with the accompanying drawings, in which:
FIG. 1 is an exemplary diagram showing an exemplary structure of a multilayer optical disk (single-sided, triple-layer optical disk) according to an embodiment of the invention;
FIG. 2 is an exemplary diagram showing an exemplary flow of a conventional manufacturing method of a single-sided, triple-layer optical disk;
FIG. 3A is an exemplary top view of convex pits of an exemplary recording pattern of Layer 1;
FIG. 3B is an exemplary cross-sectional view of the pits of the recording pattern taken along a line Y-Y' in FIG. 3A;
FIG. 4A is an exemplary top view of concave pits of an exemplary recording pattern of Layer 1;
FIG. 4B is an exemplary cross-sectional view of the pits of the recording pattern taken along a line X-X' in FIG. 4A;
FIG. 5 is an exemplary diagram showing an exemplary flow of a manufacturing method of an optical disk in the case where the depth direction of concave pits of a recording pattern is opposite to the direction in which layers are formed as shown in FIG. 4B;
FIG. 6 is an exemplary table comparing signal measurement results obtained by improving characteristics of Layer 1 and signal measurement results before the improvement;
FIG. 7 is an exemplary diagram showing an exemplary layer structure of a double-sided, four-layer optical disk;
FIG. 8 is an exemplary diagram showing an exemplary layer structure of a single-sided, n-layer optical disk;
FIG. 9 is an exemplary diagram showing an exemplary structure of a single-sided Blu-ray disk including two or more layers; and
FIG. 10 is an exemplary block diagram showing an exemplary structure of an optical disk apparatus for reproducing a multilayer optical disk.

Various embodiments according to the invention will be described hereinafter with reference to the accompanying drawings. In general, according to one embodiment of the invention, there is provided an optical disk including: a photopolymer layer including a recording pattern formed by concave pits; and a reflecting film formed on the photopolymer layer, wherein a depth direction of the concave pits is opposite to a direction in which the reflecting film is formed.

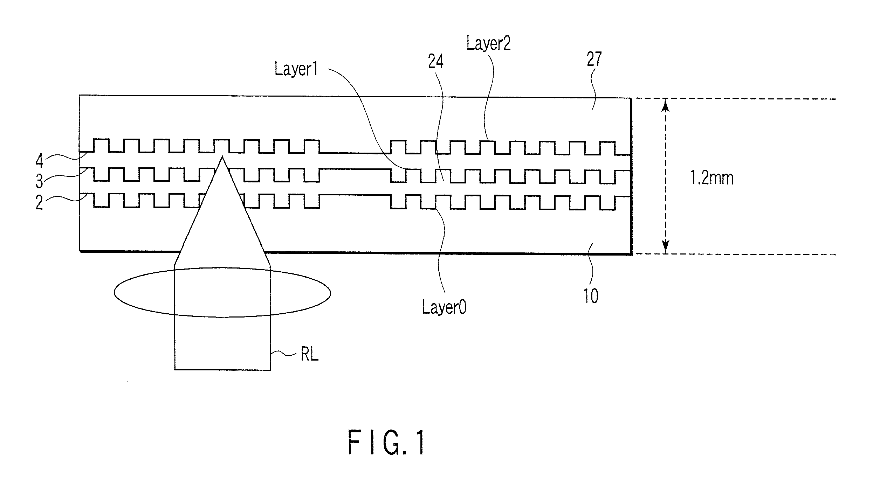

FIG. 1 is an exemplary diagram showing an exemplary structure of a multilayer optical disk (single-sided, triple-layer optical disk) according to an embodiment of the invention. The multilayer optical disk shown in FIG. 1 is, for example, a single-sided, triple-layer HD DVD ROM disk. An L0 molded board 10 includes a signal recording pattern 2 for Layer 0 (L0), and an L2 molded board 27 includes a signal recording pattern 4 for Layer 2 (L2). Information is recorded in the signal recording patterns 2 and 4. Additionally, a photopolymer layer 24 includes a signal recording pattern 3 for Layer 1 (L1). A reproducing light (RL) having a wavelength of 405 nm is emitted from the bottom side of FIG. 1 by an optical system having a numerical aperture (N/A) of 0.65.

Pits are formed in a spiral shape on each information recording layer. The length of a shortest pit is 0.204 µm, and a track pitch is 0.40 µ m. As for the size of the multilayer optical disk, the outer diameter is 120 mm, the internal diameter is 15 mm, and the total thickness is 1.2 mm ± 0.03 mm, which are the same as those of a CD or a DVD (or an HD DVD or a BD).

However, the form of the multilayer optical disk is not limited to the above-mentioned form. The multilayer optical disk may include four or more information recording layers, or may be a double-sided multilayer optical disk including three or more information recording layers in total. Additionally, the multilayer optical disk may include two or less layers as long as a layer made of a photopolymer is included. The multilayer optical disk may be a write-once optical disk or a read-only optical disk, and may use an optical system for a DVD or a BD. Further, the multilayer optical disk may include a higher-density pattern or may include a layer with a low-density pattern. The multilayer optical disk may be a reduced-diameter disk having an outer diameter of 80 mm. However, it is assumed that, in a multilayer optical disk according to one embodiment of the invention, information is recorded by a recording pattern formed by pits.

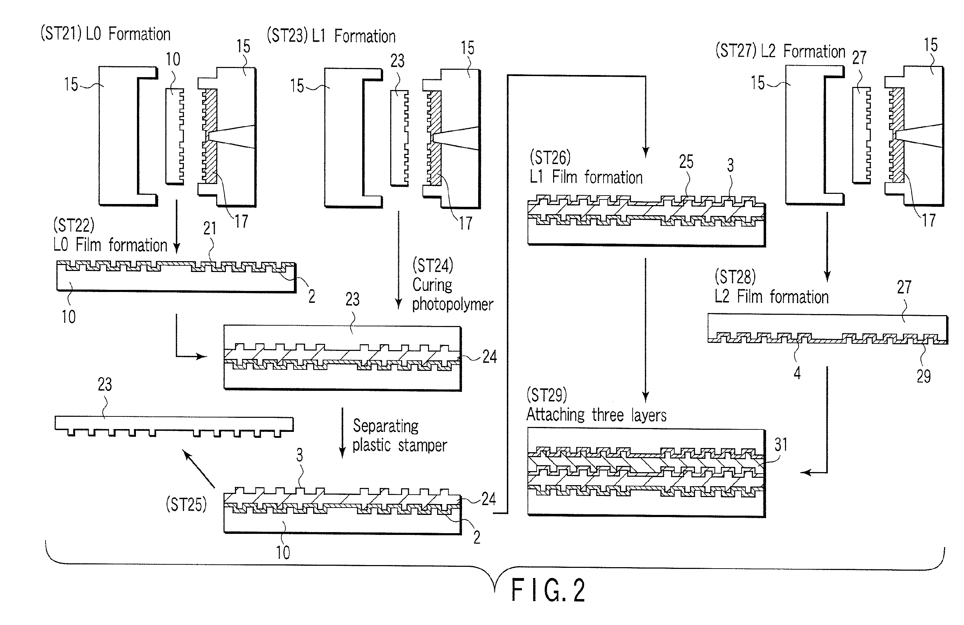

FIG. 2 is an exemplary diagram showing a flow of a conventional manufacturing method of a single-sided, triple-layer optical disk.

Referring to FIG. 2, a description is given below of the conventional manufacturing method of the single-sided, triple-layer optical disk. In FIG. 2, those parts which are the same as those corresponding parts in FIG. 1 are designated by the same reference numerals.

First, the L0 molded board 10 on which Layer 0 (the recording pattern 2) is transferred is manufactured by injection molding using a metal mold 15 and a Ni stamper 17 (ST21). This process is the same as that of a normal single-sided or double-sided DVD or HD DVD. Generally, polycarbonate is used as a molding material, and the Ni stamper 17, serving as a mold, is manufactured by plating a master which is manufactured by lithography. Then, a semi-transparent reflecting film 21 is formed on the recording pattern 2 of the L0 molded board 10 (ST22).

In parallel with ST21 and ST22, similarly, a plastic stamper 23 for Layer 1 (L1) is manufactured by injection molding (ST23). Generally, a cycloolefin polymer is used as a material of the plastic stamper 23. However, instead of the cycloolefin polymer, PMMA (polymethylmetacrylat) or polycarbonate may be used. As in ST21, the Ni stamper 17 is used for injection molding, and basically, equipment such as a molding machine and the metal mold 15 for a normal DVD is used. The L0 molded board 10 and the plastic stamper 23, which are prepared as mentioned above, are attached to each other by interposing the photopolymer layer 24 therebetween, and the photopolymer layer 24 is cured by ultraviolet light (ST24).

The photopolymer layer 24 is generally formed (applied) by spin coating. The photopolymer layer 24 serves as both a transfer layer of the recording pattern 3 of L1 and an intermediate layer which separates L0 from L1. After curing the photopolymer layer 24, the plastic stamper 23 is removed from the photopolymer layer 24 (ST25). The recording pattern 3 (of L1) is formed by the thus exposed photopolymer layer 24, and a semi-transparent reflecting film 25 is formed on the recording pattern 3 (ST26).

In parallel with ST26, an L2 molded board 27 on which Layer 2 (the recording pattern 4) is transferred is manufactured by injection molding (ST27). This process is the same as that for a normal dual-layer DVD or HD DVD. Generally, the L2 molded board 27 is molded by using polycarbonate and the Ni stamper 17. A reflecting film 29 is formed on the recording pattern 4 of L2 (ST28). Thus prepared L2 molded board 27 is attached to the semi-transparent reflecting film 25 on the recording pattern 3 of L1 by using an ultraviolet-curing resin 31 (ST29). This process is the same as that for a normal dual-layer DVD or HD DVD, and an adhesive layer formed by the ultraviolet-curing resin 31 serves as an intermediate layer which separates L1 from L2. In this manner, manufacturing of the single-sided, triple-layer optical disk is completed.

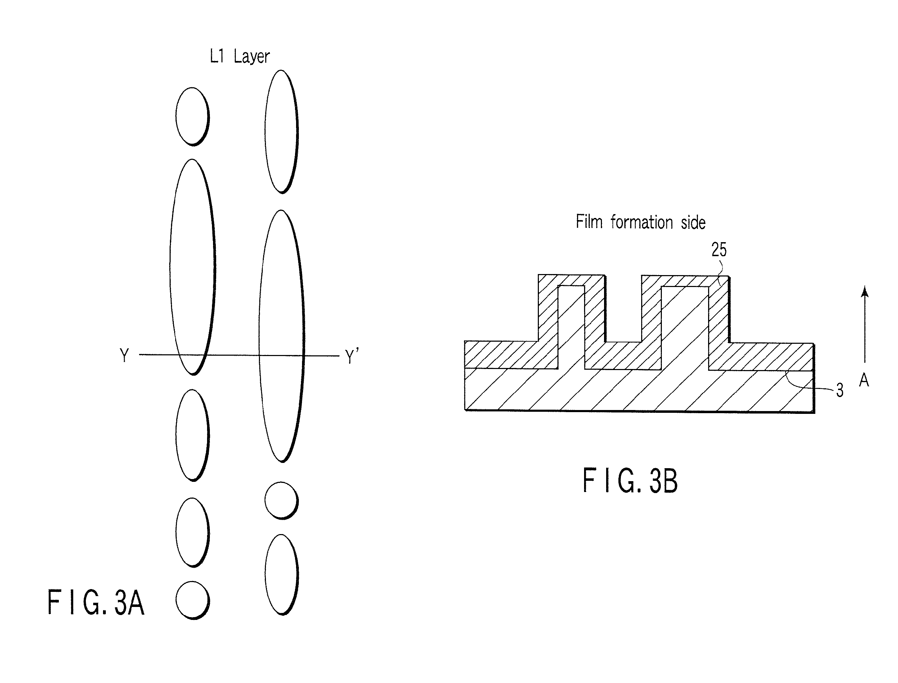

In the triple-layer optical disk manufactured by the above-mentioned method, since L1 additionally includes the process using the plastic stamper 23, the pattern finally formed generally includes concave and convex portions which are opposite to those of the other layers. FIGS. 3A and 3B are exemplary diagrams showing the recording pattern 3 of L1. FIG. 3A is an exemplary top view of pits of the recording pattern 3. FIG. 3B is an exemplary cross-sectional view of the pits taken along a line Y-Y' in FIG. 3A. Referring to the cross-sectional view of FIG. 3B, it is found that the pits project in a direction indicated by A (convex pit shape). That is, convex portions (pits) project in a direction in which the reflecting film 25 is formed. Hereinafter, the pits as shown in FIG. 3B are referred to as "convex pits".

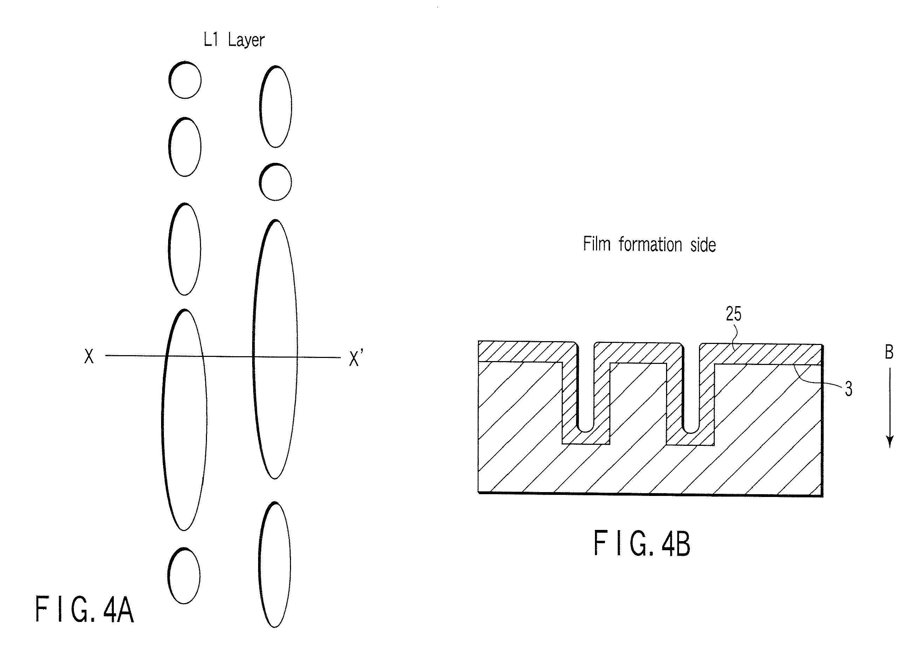

FIGS. 4A and 4B are exemplary diagrams showing a recording pattern according to an embodiment of the invention. FIGS. 4A and 4B show concave and convex portions of the pits of the recording pattern 3 of L1 which are opposite to those shown in FIGS. 3A and 3B. FIG. 4A is an exemplary top view of the pits of the recording pattern 3. FIG. 4B is an exemplary cross-sectional view of the pits taken along line X-X' in FIG. 4A. Referring to the cross-sectional view of FIG. 4B, it is found that the pits project in a direction indicated by B (concave pit shape). That is, the concave portions (pits) indicate the depth of the pits, and the direction in which the pits are formed is opposite to the direction in which the filmlayer 25 is formed. Hereinafter, the pits as shown in FIG. 4B are referred to as "concave pits".

Since it is necessary that the semi-transparent reflecting film 25 on the recording pattern 3 of L1 includes transmission property, in consideration of easiness of film formation, silver or silver alloy is generally used for the semi-transparent reflecting film 25.

However, in the triple-layer optical disk including the above-mentioned structure, there is a problem in that a signal characteristic of Layer 1 is unsatisfactory. Specifically, it has been found that when an HD DVD-ROM includes triple-layers, the asymmetry of Layer 1 is degraded (i.e., the shortest 2T pit is not satisfactorily formed), and a PRSNR (Partial Response Signal to Noise Ratio: an indicator indicating the signal quality of an HD DVD) is degraded.

The degradation is caused because the silver alloy is not satisfactorily formed on minute convex pits which are formed by the photopolymer layer 24. In other words, the semi-transparent reflecting film 25 is not satisfactorily formed on the recording pattern 3 of L1. This is because a thin film generally shrinks after formation of the thin film, and is subjected to a stress in directions in which the thin film is stretched. Generally, the adhesion of the photopolymer layer 24 is low. Additionally, in terms of the shapes, the photopolymer layer 24 is easily separated from the minute convex pits under stress. Hence, when the stress as mentioned above is applied, the semi-transparent reflecting film 25 does not correctly represent pattern formation. Accordingly, signals of Layer 1 are degraded. The thicker the semi-transparent reflecting layer 25 is, the more significant the degradation becomes. An experimental result shows that the degradation is observed when the thickness of the semi-transparent reflecting layer 25 is 4 nm or more, and the degradation becomes further significant especially when the thickness exceeds 10 nm.

Therefore, in the invention, the above-mentioned problem is solved by the following two methods.

In a first method, the concave and convex portions of the recording pattern formed by the photopolymer layer 24 (L1) are inverted, so that the convex portions of the recording pattern of the photopolymer layer 24 project in the same direction as convex portions of a recording pattern of the other layer project, which layer is formed by the molded board. For example, in the single-sided, triple-layer optical disk shown in FIG. 1, the convex portions of the recording pattern 3 of L1 and the convex portions of the recording pattern 2 of L0 project in the same direction. More specifically, as shown in FIG. 4B, the depth direction of the concave pits is opposite to the direction in which the layers are formed.

In this manner, it is possible to prevent degradation of the recording pattern due to tensile stress applied to the semi-transparent reflecting film 25 after film formation. Generally, it is known that, in the case where the thickness of a film is about one severalth to one dozenth of a pattern size, it is less likely that the film formed on a concave pit pattern is separated from a pattern under stress than the film formed on a convex pit pattern. The pattern size is the size of a pit (especially, the size of a minimum pit). More specifically, the pattern size may be the depth of a pit. For example, in the case of an HD DVD, generally, the depth of a pit is approximately 75 nm, and the width and length of the pit is approximately 200 nm. In the case of a convex pit pattern, degradation is significant when the thickness of a film is equal to or more than 5% (especially, 13%) of the pattern size. Thus, it is advantageous to use a concave pit pattern when the thickness of a film is equal to or more than 5% (especially, 13%) and equal to or less than 50% of the pattern size (when the thickness of a film is equal to or more than 50% of the pattern size, concave pits are filled with the film and the recording pattern is degraded).

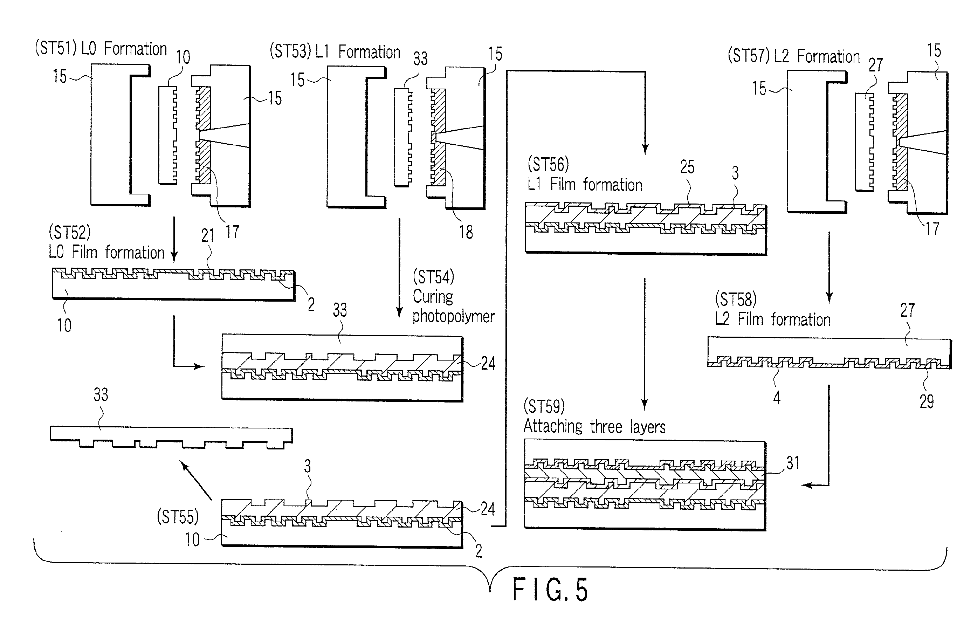

Referring to FIG. 5, a description is given of a flow of an optical disk manufacturing method in the case where the depth direction of the concave pits of a recording pattern is opposite to a direction in which layers are formed as shown in FIG. 4B. In FIG. 5, those parts which are the same as those corresponding parts in FIG. 2 are designated by the same reference numerals.

As shown in FIG. 5, first, as in ST21 shown in FIG. 2, the L0 molded board 10 on which L0 (the recording pattern 2) is transferred is manufactured by injection molding (ST51), and the semi-transparent reflecting film 21 is formed on the recording pattern 2 of the thus manufactured L0 molded board 10 (ST52). In parallel with ST51 and ST52, a plastic stamper 33 for L1 is similarly manufactured by injection molding (ST53). In an embodiment of the invention, the concave and convex shapes of the plastic stamper 33 are opposite to those of the plastic stamper 23 by making the concave and convex shapes of a Ni stamper 18 used in the injection molding in ST53 opposite to the concave and convex shapes of the Ni stamper 17 shown in FIG. 2.

The plastic stamper 33 and the L0 molded board 10 manufactured as mentioned above are attached to each other by interposing the photopolymer layer 24 therebetween, and the photopolymer layer 24 is cured by ultraviolet light (ST54). After curing the photopolymer layer 24, the plastic stamper 33 is removed from the photopolymer layer 24 (ST55). Thus, the direction in which the concave pits of the recording pattern 2 of L0 project is the same as the direction in which the concave pits of the recording pattern 3 of L1 project. That is, the depth direction of the concave pits of each of the recording patterns 2 and 3 is opposite to the direction in which the layers are formed (concave pit shape).

Then, the semi-transparent reflecting film 25 is formed on the recording pattern 3 of the photopolymer layer 24 thus exposed (ST56). In parallel with ST56, the L2 molded board 27 on which Layer 2 is transferred is manufactured by injection molding (ST57). This process is the same as that for a normal dual-layer DVD or HD DVD, and the L2 molded board 27 is generally molded by using polycarbonate and the Ni stamper 17. The reflecting film 29 is formed on the recording pattern 4 of L2 (ST58). The L2 molded board 27 on which the reflecting film 29 is formed in ST58 is attached to the semi-transparent reflecting film 25 formed in ST56 by using the ultraviolet-curing resin 31 (ST59). Accordingly, the recording pattern 2 of L0 projects in the direction which is opposite to the direction in which the semi-transparent reflecting film 21 is formed, the recording pattern 3 of L1 projects in the direction which is opposite to the direction in which the semi-transparent reflecting film 25 is formed, and the recording pattern 4 of L2 projects in the direction which is opposite to the direction in which the reflecting film 29 is formed. As a result, the single-sided, triple-layer optical disk (see FIG. 1) is manufactured in which the recording pattern 4 of L2 projects in the direction opposite to the direction in which the recording pattern 2 of L0 and the recording pattern 3 of L1 project.

By using the first method, film characteristics of the reflecting film with respect to the recording pattern of photopolymer (adhesion and adhesiveness of the film with respect to the recording pattern when the film is formed, adaptability with respect to shrinkage of the film) are improved, and the quality of a reproduction signal is improved.

In a second method, a material which adheres well to photopolymer is used for the reflecting film. The semi-transparent reflecting film 21 of an optical disk (especially, a read-only optical disk) requires various characteristics such as a reflection coefficient, a transmission factor, prices of materials, prices of film formation equipment, a film formation rate, stability of films, environment resistance, etc. In the second method, aluminum (Al) or aluminum alloy (AlMo, AlTi, etc.) is used in view of the above-mentioned characteristics and a characteristic that good adhesion to photopolymer is obtained and stress applied after film formation is low.

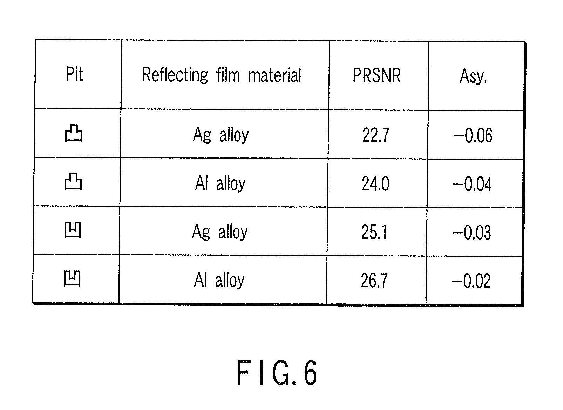

FIG. 6 shows signal measurement results obtained by improving the characteristics of L1 in comparison with signal measurement results before the improvement. The signal quality is better when the asymmetry (Asy.) is closer to 0 and when the PRSNR is higher. When an optical disk is manufactured by a general method, that is, when the optical disk is manufactured by the method as shown in FIG. 2 and the convex portions of the recording pattern 3 of L1 project in the direction in which the layer 25 is formed, silver alloy is used as the material for the reflecting film. As can be seen from FIG. 6, the signal quality is improved by changing the material for the reflecting films from silver alloy to aluminum alloy, and by inverting the recording pattern from the above-mentioned convex pit shape to the concave pit shape.

According to the embodiment, when silver or silver alloy is used as the material of the semi-transparent reflecting film (21, 25), the thickness of the semi-transparent reflecting film is 5 nm to 40 nm (preferably, 10 nm to 25 nm for Layer 1 of a triple-layer HD DVD-ROM). When aluminum or aluminum alloy is used as the material of the semi-transparent reflecting film (21, 25), the thickness of the semi-transparent reflecting film is 3 nm to 20 nm (preferably, 4 nm to 15 nm for Layer 1 of the triple-layer HD DVD-ROM).

On the other hand, when silver or silver alloy is used as the material of the reflecting film, the thickness of the reflecting film is 40 nm or more (preferably, 40 nm to 100 nm). When aluminum or aluminum alloy is used as the material of the reflecting film, the thickness of the reflecting film is 20 nm or more (preferably, 20 nm to 60 nm). It is possible to invert the recording pattern by plating the Ni stamper one more time which is used for injection molding of the plastic stamper, and manufacturing a Ni stamper including the inverted concave and convex portions.

As mentioned above, it is possible to improve the signal characteristics of a multilayer optical disk by changing the material used for the reflecting film and/or by inverting the concave and convex shapes of the recording pattern of the photopolymer layer.

In other words, it is possible to improve the signal characteristics by providing an optical disk including three or more signal recording layers (an optical disk including three or more layers which can be reproduced from one side, or a double-sided optical disk including three or more layers in total), wherein a second recording layer (when seen from a surface on which a reproducing light is incident) is formed by photopolymer, an information signal pattern is formed by the concave pits, and when the concave pits of the second recording layer project in the direction which is opposite to the direction in which the layers are formed, the material for a reflecting film is silver or silver alloy, or aluminum or aluminum alloy (preferably, silver or silver alloy), when the convex pits project in the direction which is the same as the direction in which the layers are formed, the material of the reflecting film is aluminum or aluminum alloy.

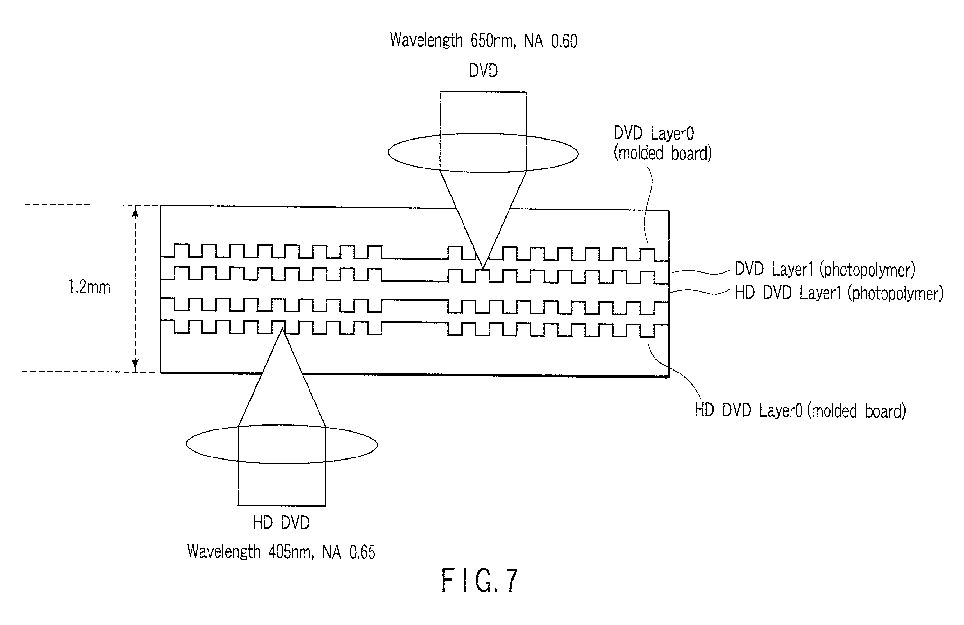

Referring to FIGS. 7 through 9, a description is given of other embodiments of the invention.

FIG. 7 is an exemplary diagram showing an exemplary layer structure of a double-sided, four-layer optical disk. Among the four layers, two layers on one side of the optical disk are for a relatively low density recording such as a DVD, and the other two layers on the opposite side are for a relatively high density recording such as an HD DVD. Specifically, as shown in FIG. 7, low density layers such as a DVD Layer 0 (molded board) and a DVD Layer 1 (photopolymer) are formed as recording layers in this order from the top of the optical disk, and the depth direction of the concave pits is opposite to the direction in which the DVD Layer 1 is formed (in this case, the bottom side of FIG. 7). In the case where the direction in which the convex pits of the DVD Layer 1 project is the same as the direction in which the DVD Layer 1 is formed, aluminum is used for a reflecting film.

Further, the other two layers on the other side of the optical disk are an HD DVD Layer 0 (molded board) and an HD DVD Layer 1 (photopolymer), which are formed in this order from the bottom side of FIG. 7. These two layers allow recording in a high density. The depth direction of the concave pits is opposite to the direction in which the HD DVD Layer 1 is formed (in this case, the bottom side of FIG. 7). In the case where the depth direction of the concave pits is opposite to the direction in which the HD DVD Layer 1 is formed, aluminum is used for a reflecting film.

According to the disk shown in FIG. 7, film characteristics of the reflecting films with respect to the recording patterns on the photopolymer (adhesion and adhesiveness of films with respect to the recording patterns when the films are formed, adaptability with respect to shrinkage of films) are improved, and the quality of a reproduction signal is improved.

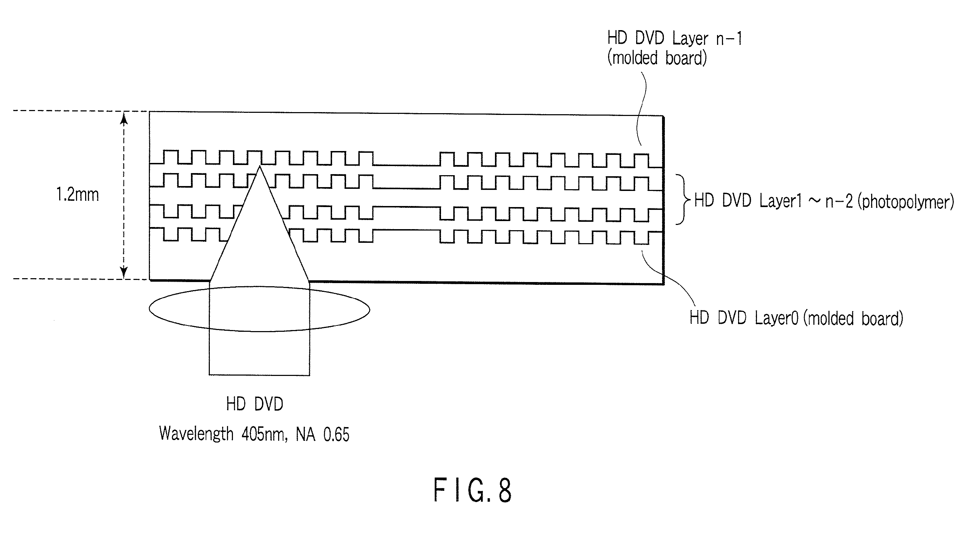

FIG. 8 is an exemplary diagram showing an exemplary layer structure of a single-sided n-layer optical disk. As shown in FIG. 8, an HD DVD Layer 0 (molded board) is provided at the bottom of the optical disk, an HD DVD Layer n-1 (molded board) is provided on the top of the optical disk, and HD DVD Layer 1 through HD DVD Layer n-2 (intermediate layers) are provided between the HD DVD Layer 0 and the HD DVD Layer n-1. In the HD DVD Layer 1 through the HD DVD Layer n-2, the depth direction of the concave pits is opposite to the direction in which the reflecting films are formed.

Additionally, since a third layer (HD DVD Layer 2) from the bottom of FIG. 8 is formed from the bottom side of FIG. 8, the depth direction of the concave pits in the third layer is opposite to the direction in which the layers are formed. In the case where, in the intermediate layers, the depth direction of the concave pits is the same as the direction in which the layers are formed, aluminum is used for the reflecting film.

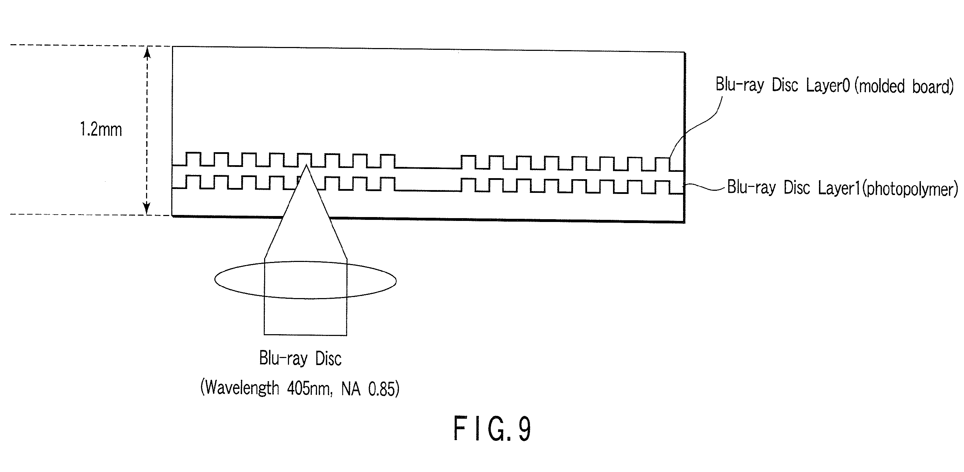

FIG. 9 is an exemplary diagram showing an exemplary structure of a single-sided Blu-ray disk including two or more layers. In Blu-ray disks (hereinafter referred to as "BD"), a recording surface is covered with a cover layer having a thickness of about 0.1 mm. As shown in FIG. 9, a BD Layer 1 (photopolymer) and a BD Layer 0 (molded board) are stacked in this order from the bottom of FIG. 9. The BD Layer 1 is formed from the bottom side of FIG. 9, and the depth direction of the concave pits is opposite to the direction in which the reflecting films are formed. In the case where the direction in which the convex pits project is the same as the direction in which the layers are formed, aluminum is used for the reflecting film.

In each of the cases shown in FIG. 7 through 9, the recording pattern formed by the photopolymer layer is a concave and convex pattern where the depth direction of the concave pits is opposite to the direction in which the reflecting film is formed. On the other hand, in the case where the direction in which the convex pits project is the same as the direction in which the reflecting film is formed, the material for the reflecting films is aluminum or aluminum alloy.

In this manner, film characteristics of the reflecting film with respect to the recording pattern formed by the photopolymer (adhesion and adhesiveness of the film with respect to the recording pattern when the film is formed, adaptability with respect to shrinkage of the film) are improved, and the quality of a reproduction signal is improved.

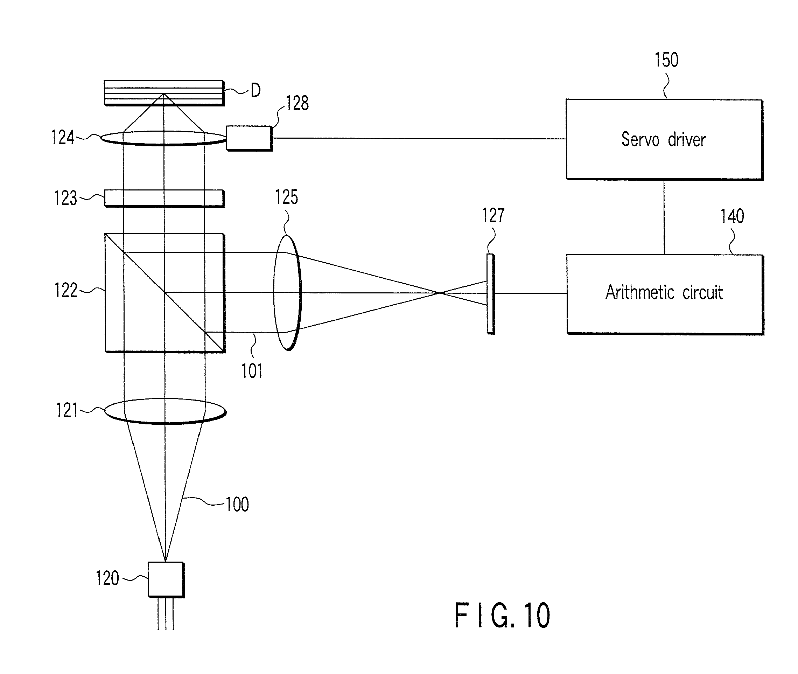

Next, a description is given of an optical disk apparatus which reproduces information recorded on the above-mentioned optical disk. FIG. 10 is an exemplary block diagram showing an exemplary structure of an optical disk apparatus for reproducing an optical disk. As shown in FIG. 10, an optical disk D is, for example, the single-sided, triple-layer optical disk shown in FIG. 1. A semiconductor laser light source 120 is used as a light source. The wavelength of light 100 emitted from the semiconductor laser light source 120 is, for example, in a range of 400 nm to 410 nm, i.e., a purple wavelength range. The light 100 emitted from the semiconductor laser light source 120 enters a collimating lens 121 and exits as parallel light. The parallel light passes through a polarizing beam splitter 122 and a λ/4 board 123, and enters an objective lens 124. Then, the light passes through a substrate of the optical disk D, and is focused on each information recording layer. Reflected light 101 reflected by an information recording layer of the optical disk D passes through the substrate of the optical disk D again, passes through the objective lens 124 and the λ/4 board 123, and is reflected by the polarizing beam splitter 122. Then the reflected light 101 passes through a condenser lens 125, and is incident on a photodetector 127.

A photoreceiving unit of the photodetector 127 is generally divided into a plurality of portions, and each of the portions outputs a current corresponding to light intensity. The output current is converted into a voltage signal by an I/V amplifier (current-to-voltage conversion) (not shown), and is input to an arithmetic circuit 140. The input voltage signal is subjected to arithmetic processing by the arithmetic circuit 140, and a tilt error signal, a HF signal, a focus error signal, a tracking error signal, etc. are generated. The tilt error signal is used for tilt control. The HF signal is for reproducing the information recorded on the optical disk D. The focus error signal is used for focus control. The tracking error signal is used for tracking control.

The objective lens 124 can be driven up and down, in a disk radial direction, and in a tilt direction (radial direction and/or tangential direction) by a lens actuator 128. The objective lens 124 is controlled by a servo driver 150 to follow information tracks on the optical disk D. It should be noted that there are two kinds of tilt directions: a "radial tilt" caused by a tilt of a disk surface toward the center of the optical disk D; and a "tangential tilt" caused in a tangential direction of an information track. Among these kinds of tilts, the radial tilt is generally caused. In addition to a tilt caused at the time of manufacturing of the optical disk D, a tilt due to aging or a sudden change in a use environment should be considered.

By using the optical disk apparatus as mentioned above, it is possible to reproduce the optical disk according to one embodiment of the invention. That is, it is possible to reproduce, by the above-mentioned optical disk apparatus, an optical disk where the depth direction of the concave pits is opposite to the direction in which the reflecting film is formed, and an optical disk where the direction in which the convex pits project is the same as the direction in which the reflecting film is formed, and aluminum is used as the material of the reflecting film.

## Claims

1. An optical disk **characterized by** comprising:
a photopolymer layer (24) including a recording pattern (3) formed by concave pits; and
a reflecting film (25) formed on the photopolymer layer (24),
wherein a depth direction of the concave pits is opposite to a direction in which the reflecting film (25) is formed.

2. An optical disk **characterized by** comprising:
a photopolymer layer (24) including a recording pattern (3) formed by convex pits; and
a reflecting film (25) formed on the photopolymer layer (24) and made of one of aluminum and aluminum alloy,
wherein a direction in which the convex pits project is the same as a direction in which the reflecting film (25) is formed.

3. An optical disk **characterized by** comprising:
three recording layers, at least one of the recording layers being a photopolymer layer (24) including a recording pattern (3) formed by concave pits, the one of the recording layers being second closest to a surface on which a reproducing light is incident; and
a reflecting film (25) formed on the one of the recording layers, and made of one of silver, silver alloy, aluminum, and aluminum alloy,
wherein a depth direction of the concave pits is opposite to a direction in which the reflecting film (25) is formed.

4. An optical disk **characterized by** comprising:
three recording layers, at least one of the recording layers being a photopolymer layer (24) including a recording pattern (3) formed by convex pits, the one of the recording layers being second closest to a surface on which a reproducing light is incident; and
a reflecting film (25) formed on the one of the recording layers, and made of one of aluminum and aluminum alloy,
wherein a direction in which the convex pits project is the same as a direction in which the reflecting film (25) is formed.

5. A method of manufacturing an optical disk including three recording layers, **characterized by** comprising:
forming a plastic stamper (33) which includes convex portions for transferring a recording pattern (3) formed by concave pits, the convex portions being formed such that a depth direction of the concave pits become opposite to a direction in which a reflecting film (25) is to be formed;
forming a photopolymer layer (24) which serves as one of the recording layers which is second closest to a surface on which a reproducing light is incident;
transferring the recording pattern (3) to the photopolymer layer (24) by using the plastic stamper (33); and
forming the reflecting film (25) on the photopolymer layer (24).

6. A method of reproducing an optical disk, **characterized by** comprising:
emitting laser light onto an optical disk according to any one of claims 1 to 4;
receiving the laser light reflected by the optical disk; and
reproducing information recorded on the optical disk based on the received laser light.
